# EUROPÄISCHE PATENTANMELDUNG

(11) **EP 2 141 563 A1**
(43) Veröffentlichungstag der Anmeldung: **06.01.2010**
(21) Anmeldenummer: 08011960.5
(22) Anmeldetag: 02.07.2008
(51) Int. Cl.: G05B 19/418

(54) **Komponente einer Maschine aus der Automatisierungstechnik**

(71) Anmelder: Siemens Aktiengesellschaft, 80333 München (DE)
(72) Erfinder: Moniac, Sven, 91056 Erlangen (DE); Singer, Marc, 91301 Forchheim (DE)

(57) **Zusammenfassung**

Die Erfindung schafft eine Komponente einer Maschine aus der Automatisierungstechnik, bei der in der Komponente gespeicherte Daten von der Komponente der Maschine an ein externes Gerät übermittelt werden können und/oder Daten vom externen Gerät an die Komponente der Maschine übermittelt werden können und in der externen Komponente gespeichert werden können und zwar auch dann, wenn die Komponente nicht über einen Energieversorgungsanschluss der Komponente mit elektrisscher Energie versorgt wird.

## Beschreibung

Die Erfindung betrifft eine Komponente einer Maschine aus der Automatisierungstechnik.

Bei einer Maschine aus der Automatisierungstechnik, wie z.B. einer Werkzeugmaschine, Produktionsmaschine und/oder einem Roboter, müssen häufig Daten von Komponenten der Maschine, wie z.B. Bestellnummer, Fertigungsnummer, Produktnummer, Zulassungsnummer, Hardwarestand, Softwarestand und/oder die Netzwerkadresse der Komponente ermittelt werden. Im verbauten Zustand der Komponente können diese Daten in der Regel nur schwer ermittelt werden, da z.B. eine an der Komponente angebrachte Bestellnummer nicht mehr von Außen einsehbar ist. Weiterhin ist es auch nicht möglich von verschiedenen Komponenten der Maschine die Daten zentral in einer bestimmten Komponente der Maschine zu sammeln und dort z.B. mit Hilfe eines Lesegerätes zentral auszulesen. Weiterhin wird häufig die Anforderung gestellt, von einem externen Gerät in eine bestimmte Komponente Daten zu schreiben und z.B. von dort aus an andere Komponenten der Maschine weiter zu verteilen.

Es ist Aufgabe der Erfindung, eine Komponente einer Maschine aus der Automatisierungstechnik zu schaffen, bei der in der Komponente gespeicherte Daten von der Komponente der Maschine an ein externes Gerät übermittelt werden können und/oder Daten vom externen Gerät an die Komponente der Maschine übermittelt werden können und in der externen Komponente gespeichert werden können und zwar auch dann, wenn die Komponente nicht über einen Energieversorgungsanschluss der Komponente mit elektrischer Energie versorgt wird.

Diese Aufgabe wird gelöst durch eine Komponente einer Maschine aus der Automatisierungstechnik, wobei die Komponente eine Speichereinrichtung, einen Energieversorgungsanschluss und eine Kommunikationseinheit aufweist, wobei die Komponente derart ausgebildet ist, dass wenn die Komponente mit elektrischer Energie über den Energieversorgungsanschluss versorgt wird, die Speichereinrichtung über den Energieversorgungsanschluss mit elektrischer Energie versorgt wird, wobei die Komponente eine Antenne aufweist über die die Speichereinrichtung auch von einem externen Gerät mit elektrischer Energie versorgbar ist, wobei die Speichereinrichtung ausgebildet ist, Daten von dem externen Gerät zu empfangen und die Daten zu speichern und/oder in der Speichereinrichtung gespeicherte Daten an das externe Gerät zu senden, wobei die Speichereinrichtung derart ausgebildet ist, dass wenn die elektrische Energieversorgung der Speichereinrichtung durch die Komponente erfolgt, Daten von der Kommunikationseinheit an die Speichereinrichtung übermittelbar sind und in der Speichereinrichtung speicherbar sind und/oder in der Speichereinrichtung gespeicherte Daten an die Kommunikationseinheit übermittelbar sind.

Vorteilhafte Ausbildungen der Erfindung ergeben sich aus den abhängigen Ansprüchen.

Es erweist sich als vorteilhaft, wenn die Kommunikationseinheit über einen Datenbus zum Übermitteln von Daten mit der Speichereinrichtung verbunden ist. Ein Datenbus stellt eine übliche Anbindung der Kommunikationseinheit mit der Speichereinrichtung dar.

Ferner erweist es sich als vorteilhaft, wenn die Kommunikationseinheit als Mikrocontroller ausgebildet ist. Eine Ausbildung der Kommunikationseinheit als Mikrocontroller stellt eine übliche Ausbildung der Kommunikationseinheit dar.

Ferner erweist es sich als vorteilhaft, wenn die Komponente eine Schnittstelle aufweist über die Daten von einer weiteren Komponente der Maschine über die Kommunikationseinheit an die Speichereinrichtung übermittelbar sind und in der Speichereinrichtung speicherbar sind und/oder über die in der Speichereinrichtung gespeicherte Daten von der Speichereinrichtung über die Kommunikationseinheit an die weitere Komponente der Maschine übermittelbar sind. Hierdurch wird es der Komponente ermöglicht von der weiteren Komponente der Maschine Daten zu empfangen oder an diese zu senden. Somit können Daten von verschiedenen Komponenten der Maschine zentral auf einer Komponente der Maschine gespeichert werden und von einen externen Gerät zentral ausgelesen werden.

Ferner erweist es sich als vorteilhaft, wenn die Komponente einen Sensor aufweist und/oder ein Sensor an die Komponente angekoppelt ist, der eine physikalische Größe misst und als Daten in der Speichereinrichtung abspeichert. Hierdurch können während des Betriebs der Komponente auftretende physikalische Größen wie z.B. eine Temperatur gemessen werden und als Daten in der Speichereinrichtung abgespeichert werden und anschließend, auch wenn gerade die Komponente nicht über einen Energieversorgungsanschluss der Komponente mit elektrischer Energie versorgt wird, mittels des externen Gerätes ausgelesen werden.

Ferner erweist es sich als vorteilhaft, wenn die Komponente einen Zähler aufweist, der die Betriebsdauer der Komponente ermittelt und als Daten in der Speichereinrichtung abspeichert. Hierdurch kann die Betriebsdauer der Maschine fortlaufend ermittelt werden und von dem Lesegerät ausgelesen werden.

Ferner erweist es sich als vorteilhaft, wenn die Daten in Form von einer Bestellnummer, Fertigungsnummer, Produktnummer, Zulassungsnummer, Hardwarestand, Softwarestand, Netzwerkadresse, physikalische Größe, Betriebsdauer und/oder als Beschreibungstext vorliegen. Eine Ausbildung der Daten in der oben angegebenen Form stellt eine übliche Ausbildung der Daten dar. Es sei an dieser Stelle angemerkt, dass im Rahmen der Erfindung unter einem Datum ein einzelnes Datenbit verstanden wird und unter dem Begriff Daten mehrere Datenbits. Ferner erweist es sich als vorteilhaft, wenn die Antenne an das Gehäuse der Komponente angeordnet ist oder in das Material des Gehäuses der Komponente eingebettet ist, da dann eine zuverlässige Übertragung der Daten zwischen Komponente und externen Gerät sichergestellt ist.

Ferner erweist es sich als vorteilhaft, wenn die Komponente als Bedieneinrichtung, Steuereinrichtung, Regeleinrichtung, Stromrichter, Motor, Geber oder als Schaltschrank ausgebildet ist. Die oben genannten Ausbildungen der Komponente stellen übliche Ausbildungen der Komponente dar.

Es erweist sich dabei als vorteilhaft eine Werkzeugmaschine, Produktionsmaschine und/oder einen Roboter mit der erfindungsgemäßen Komponente auszubilden.

Ein Ausführungsbeispiel der Erfindung ist in der Zeichnung dargestellt und wird im Folgenden näher erläutert. Dabei zeigen:
- FIG 1: eine Maschine aus der Automatisierungstechnik, und
- FIG 2: eine erfindungsgemäße Komponente einer Maschine aus der Automatisierungstechnik.

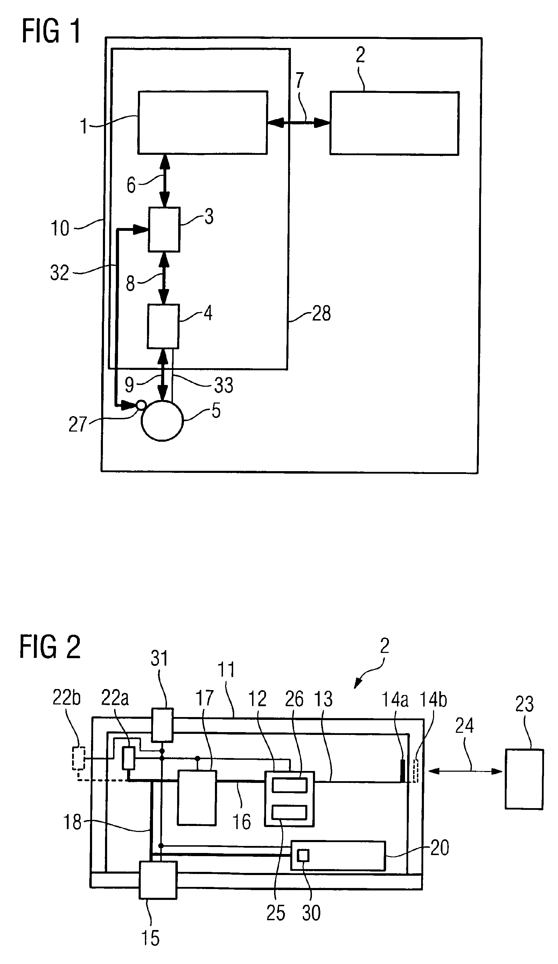

In FIG 1 ist in Form einer schematisierten Darstellung eine Maschine aus der Automatisierungstechnik, die im Rahmen des Ausführungsbeispiels als Werkzeugmaschine 10 ausgebildet ist, dargestellt. Die Werkzeugmaschine 10 weist dabei mehrere Komponenten auf. Im Rahmen des Ausführungsbeispiels weist die Werkzeugmaschine 10 als Komponenten eine Steuereinrichtung 1, eine Bedieneinrichtung 2, eine Regeleinrichtung 3, einen Stromrichter 4, einen Motor 5 und zur Ermittlung der Drehgeschwindigkeit des Motors 5 einen Geber 27 auf. Die Steuereinrichtung 1 übermittelt dabei an die Regeleinrichtung 3 Sollwerte zur Regelung der Drehgeschwindigkeit des Motors 5. Die Regeleinrichtung 3 regelt dann entsprechend über einen an der Regeleinrichtung 3 angeschlossenem Stromrichter 4 die Drehgeschwindigkeit des Motors 5. Die einzelnen Komponenten tauschen dabei Daten über die Verbindungen 6, 7, 8, 9 und 32, die üblicherweise in Form von Datenbusverbindungen vorliegen, aus. Über eine Verbindung 33 wird der Motor 5 vom Stromrichter 4 mit elektrischer Energie versorgt. Die Regeleinrichtung 3, der Stromrichter 4 und der Motor bilden einen sogenannten Antriebsstrang. Die Werkzeugmaschine 10 weist dabei mehrere solcher Antriebsstränge auf, von denen der Übersichtlichkeit halber in FIG 1 nur ein Antriebsstrang dargestellt ist. Die Steuereinrichtung 1, die Regeleinrichtung 3 und der Stromrichter 4 sind in einem Schaltschrank 28 angeordnet. Mit Hilfe der Bedieneinrichtung 2 können z.B. von einem Anwender zur Bedienung der Maschine Daten eingegeben werden und an die Steuereinrichtung 1 übermittelt werden.

In FIG 2 ist in Form einer schematisierten Darstellung eine erfindungsgemäße Komponente einer Maschine aus der Automatisierungstechnik, die im Rahmen des Ausführungsbeispiels in Form der Bedieneinrichtung 2 der Werkzeugmaschine 10 vorliegt, detaillierter dargestellt. Die Bedieneinrichtung 2 weist zur Realisierung der eigentlichen Bedienfunktionalität interne Bedienkomponenten 20 auf, die der Übersichtlichkeit halber in FIG 2 als ein einzelner rechteckförmiger Block dargestellt sind. Weiterhin weist die Bedieneinrichtung 2 zur Versorgung der Bedieneinrichtung 2 mit elektrischer Energie ein Energieversorgungsanschluss 31 auf, über den die Bedieneinrichtung 2, bei Anschluss einer Versorgungsspannung an den Energieversorgungsanschluss 31, mit elektrischer Energie versorgbar ist. Die elektrischen Verbindungen zwischen dem Energieversorgungsanschluss 31 und den übrigen internen Elementen der Bedieneinrichtung 2 sind in FIG 2 dünn gezeichnet schematisiert dargestellt, wobei gegebenenfalls, falls notwendig noch Anpassschaltungen zur Anpassung der Versorgungsspannung an das vom jeweiligen interne Element benötige Spannungsniveau zwischen dem Energieversorgungsanschluss 31 und den übrigen internen Elementen der Bedieneinrichtung 2 vorhanden sein können. Eine der internen Bedienkomponenten 20 weist im Rahmen des Ausführungsbeispiels zur Ermittelung der Betriebsdauer der Bedieneinrichtung 2 einen Zähler 30 auf. Weiterhin weist die Bedieneinrichtung 2 eine Speichereinrichtung 12 auf, die wenn die Bedieneinrichtung 2 mit elektrischer Energie über den Energieversorgungsanschluss 31 versorgt wird über den Energieversorgungsanschluss 31 mit elektrischer Energie versorgt wird.

Die Speichereinrichtung 12 weist einen Speicher 25 auf, in dem Daten gespeichert werden können, sowie eine Kommunikationseinrichtung 26, die eine Übermittelung von Daten zwischen dem Speicher 25 und einer Kommunikationseinheit 17 der Bedieneinrichtung 2, sowie eine Übermittelung von Daten zwischen dem Speicher 25 und einem externen Gerät 23 ermöglicht. Die Speichereinrichtung 12 ist über eine Verbindung 13 an eine Antenne 14a angekoppelt, wobei im Rahmen des Ausführungsbeispiels die Antenne 14a an einem Gehäuse 11 der Komponente 2 angeordnet ist. Alternativ kann die Antenne auch in das Material des Gehäuses der Komponente eingebettet sein, was in FIG 2 gestrichelt gezeichnet dargestellt ist und mit dem Bezugszeichen 14b versehen ist.

Wenn die Antenne in das Material des Gehäuses eingebettet ist, ist die empfindliche Antenne gegenüber Bewegungen, die z.B. während des Transports der Bedieneinrichtung 2 auftreten können, geschützt.

Weiterhin weist die Bedieneinrichtung 2 eine Kommunikationseinheit 17 auf, die über einen Datenbus 16 zum Übermitteln von Daten, mit der Speichereinrichtung 12 verbunden ist. Die Kommunikationseinheit 17 ist dabei vorzugsweise als Mikrocontroller ausgebildet und stellt die Kommunikation zwischen der Speichereinrichtung 12 und den Bedienkomponenten 20, einer Schnittstelle 15 sowie einem Sensor 22a her. Der Sensor 22a misst eine physikalische Größe, die im Rahmen des Ausführungsbeispiels in Form der internen Temperatur der Bedieneinrichtung 2 vorliegt. Die Bedieneinrichtung sendet über den Datenbus 16 entsprechende Schreib- und/oder Lesesignale an die Speichereinheit 12 um in den Speicher 25 Daten zu speichern und/oder Daten aus dem Speicher zu lesen. Es sei an dieser Stelle angemerkt, dass die Bedieneinrichtung 2 zusätzlich oder alternativ zum Sensor 22a zur Messung einer physikalischen Größe (wie z.B. der Temperatur), einen an die Bedieneinrichtung 2 angekoppelten Sensor 22b aufweisen kann, was in FIG 2 gestrichelt gezeichnet dargestellt ist. Der Sensor 22a, die Kommunikationseinheit 17, die Bedienkomponenten 20 und die Schnittstelle 15 sind dabei im Rahmen des Ausführungsbeispiels über einen Datenbus 18, miteinander verbunden. Über die Schnittstelle 15 kann die Bedieneinrichtung 2 mit weiteren Komponenten der Maschine, d.h. z.B. mit der Steuereinrichtung 1 gemäß FIG 1 und/oder der Regeleinrichtung 6 kommunizieren.

Über die Schnittstelle 15 können solchermaßen Daten von einer weiteren Komponente der Maschine, d.h. im Rahmen des Ausführungsbeispiels von der Steuereinrichtung 1 an die Speichereinrichtung 12 übermittelt werden und in der Speichereinrichtung 12 im Speicher 25 gespeichert werden. Weiterhin können im Rahmen des Ausführungsbeispiels aber auch Daten über die Schnittstelle 15 von der Speichereinrichtung an die Steuereinrichtung 1 übermittelt werden.

Die Speichereinrichtung 12 kann jedoch nicht nur über den Energieversorgungsanschluss 31 mit elektrischer Energie versorgt werden, sondern kann auch über die Antenne 14a von einem externen, d.h. nicht zur Werkzeugmaschine 10 gehörenden Gerät, wenn sich das Gerät in unmittelbarer Nähe der Antenne 14a befindet, mit elektrischer Energie versorgt werden. Dies geschieht über die allgemein bekannte RFID-Technologie (Radio Frequency Identification). Das externe Gerät 23 erzeugt dabei ein elektromagnetisches Hochfrequenzfeld geringer Reichweite mit Hilfe dessen über die Antenne 14a die Speichereinrichtung 12, solange sich das externe Gerät 23 in unmittelbarer Nähe der Antenne 14a befindet, mit elektrischer Energie versorgt wird. Die Speichereinrichtung 12 kann somit, auch wenn die Bedieneinrichtung 2 gerade nicht über den Energieversorgungsanschluss 31 von der Werkzeugmaschine 10 mit elektrischer Energie versorgt wird, weil z.B. die gesamte Werkzeugmaschine wegen Wartungsarbeiten ausgeschaltet ist und damit keine Versorgungsspannung zu Verfügung steht, mit elektrischer Energie versorgt werden. Über das Hochfrequenzfeld wird nicht nur die elektrische Energie zum Betrieb der Speichereinrichtung 12 zur Verfügung gestellt, sondern es können auch Daten von dem externen Gerät 23, das im Rahmen des Ausführungsbeispiels als Schreib-Lese-Gerät ausgebildet ist, an die Speichereinrichtung übermittelt werden oder von der Speichereinrichtung 12 Daten an das externe Gerät 23 übermittelt werden, was durch einen Doppelpfeil 24 in FIG 2 dargestellt ist.

Der Sensor 22a ist im Rahmen des Ausführungsbeispiels als Temperatursensor ausgebildet und misst in regelmäßigen Abständen die während des Betriebs der Bedieneinrichtung 2 auftretende Temperatur und übermittelt diese über die Kommunikationseinheit 17, die die Kommunikation mit der Speichereinrichtung 12 sicherstellt an die Speichereinrichtung 12. Die Temperaturdaten werden dann im Speicher 25 der Speichereinrichtung 12 gespeichert. Der Speicher 25 kann dabei jederzeit vom externen Gerät 23 über die Antenne 14a ausgelesen werden und die ausgelesenen Daten dem Anwender vom externen Gerät 23 visualisiert werden und im externen Gerät 23 gespeichert werden. Da die Speichereinrichtung 12 auch vom externen Gerät 23 mit elektrischer Energie versorgt werden kann, können die Temperaturdaten auch ausgelesen werden, wenn die Werkzeugmaschine 10, z.B. zu Wartungszwecken ausgeschaltet ist und damit die Bedieneinrichtung nicht, wie bei eingeschalteter Werkzeugmaschine von der Werkzeugmaschine, über den Energieversorgungsanschluss 31 mit elektrischer Energie versorgt wird.

Weiterhin können aber auch, z.B. wenn die Werkzeugmaschine 10 ausgeschalten ist und damit die Bedieneinrichtung 2 nicht mit elektrischer Energie versorgt wird, Daten wie z.B. ein neuer Softwarestand für die Bedieneinrichtung 2 vom externen Gerät über die Antenne 14a zur Speichereinrichtung 12 übermittelt werden und dort im Speicher 25 gespeichert werden. Wird anschließend die Werkzeugmaschine 10 wieder eingeschalten und damit die Bedieneinrichtung 2 wieder mit elektrischer Energie versorgt, dann wird vom Speicher 25 der neue Softwarestand über die Kommunikationseinheit 17 an die Bedienkomponenten 20 übertragen und dort ausgeführt. Solchermaßen wird mit Hilfe der Erfindung ermöglicht, z.B. auch wenn die betreffende Komponente der Maschine nicht in Betrieb ist, z.B. ein neuer Softwarestand für die Komponente an die Komponente zu übermitteln. Über die Schnittstelle 15 kann die Bedieneinrichtung 2, z.B. mit der Steuereinrichtung 1 der Werkzeugmaschine 10, Daten austauschen, was durch einen Doppelpfeil 7 in FIG 1 dargestellt ist. Solchermaßen können Daten z.B. von einer weiteren Komponente der Werkzeugmaschine, wie z.B. der Steuereinrichtung 1, an die Bedieneinrichtung 2 übermittelt werden und dort in der Speichereinrichtung 12 gespeichert werden. Diese Daten können dann sowohl im Betrieb der Werkzeugmaschine 10 als auch bei ausgeschalteter Werkzeugmaschine 10 von dem vom Anwender mittels des externen Gerät 23 ausgelesen werden.

Da die einzelnen Komponenten der Werkzeugmaschine in der Regel alle untereinander zum Austausch der Daten über ein Bussystem verbunden sind, können somit von sämtlichen Komponenten, auftretende Daten, an die Speichereinrichtung 12 der Bedieneinrichtung 2 übermittelt werden und dort bei Bedarf vom externen Gerät 23 ausgelesen werden. So können z.B. die Bestellnummern, Fertigungsnummern, Produktionsnummer, Zulassungsnummern, Hardwarestände, Softwarestände, Netzwerkadressen, verschiedene physikalische Größen, Betriebsdauern der einzelnen Komponente zentral an die Speichereinrichtung 12 der Bedieneinrichtung 2 übermittelt werden und dort im Speicher 25 gespeichert werden. Diese Daten können dann jederzeit, d.h. sowohl wenn die Bedieneinrichtung 2 mit elektrischer Energie über den Energieversorgungsanschluss 31 versorgt wird als auch wenn die Bedieneinrichtung 2 nicht mit elektrischer Energie über den Energieversorgungsanschluss 31 versorgt wird (z.B. wenn die Werkzeugmaschine ausgeschalten ist), vom externen Gerät 23 ausgelesen werden. Solchermaßen können z.B. nach auftretenden Störungen, die eine Abschaltung der Werkzeugmaschine 10 zur Folge haben, auftretende Daten mittels des externen Gerätes 23 von der Speichereinrichtung 12 ausgelesen werden und eine Fehleranalyse mittels der ausgelesenen Daten durchgeführt werden. Ein Einschalten der Werkzeugmaschine 10 ist hierzu nicht mehr notwendig.

Daten, wie z.B. physikalische Größen, insbesondere eine Temperatur und/oder Betriebsdauer, können dabei aber auch von z.B. von einer an die Steuereinrichtung 1 angekoppelten Sensor oder geeigneten Erfassungsmittels ermittelt werden und z.B. an die Speichereinrichtung 12 der Bedieneinrichtung 2 übermittelt werden und im Speicher 25 gespeichert werden. Üblicherweise werden die Speichereinrichtung 12 und die Kommunikationseinheit 17 auf einer Leiterplatte angeordnet. Die Leiterplatte kann dann z.B. an eine Tür des Schaltschranks 28 angebracht werden. Im Rahmen der Erfindung wird ein Schaltschrank einer Maschine aus der Automatisierungstechnik ebenfalls als Komponente einer Maschine aufgefasst. Die Kommunikationseinheit 17 kann dann über eine entsprechende Schnittstelle entsprechend, wie vorher bei der Bedieneinheit 2 beschrieben, an die weiteren Komponenten der Maschine zum Austausch von Daten angekoppelt werden.

Es sei an dieser Stelle angemerkt, dass die Schnittstelle 15 im einfachsten Fall als eine Buchse ausgebildet ist, aber gegebenenfalls, falls notwendig auch Kommunikationsmittel zur Realisierung einer Kommunikation (z.B. für eine Datenbusanbindung) mit den weiteren Komponenten aufweisen kann.

Weiterhin sei an dieser Stelle angemerkt, dass der Datenbus 16 zwischen Kommunikationseinheit 17 und Speichereinrichtung 12 z.B. als USB-Bus, SPI-Bus oder als I2C-Bus ausgeführt sein kann.

## Patentansprüche

1. Komponente einer Maschine (10) aus der Automatisierungstechnik, wobei die Komponente (2) eine Speichereinrichtung (12), einen Energieversorgungsanschluss (31) und eine Kommunikationseinheit (17) aufweist, wobei die Komponente (2) derart ausgebildet ist, dass wenn die Komponente (2) mit elektrischer Energie über den Energieversorgungsanschluss (31) versorgt wird, die Speichereinrichtung (12) über den Energieversorgungsanschluss (31) mit elektrischer Energie versorgt wird, wobei die Komponente (2) eine Antenne (14a,14b) aufweist über die die Speichereinrichtung (12) auch von einem externen Gerät mit elektrischer Energie versorgbar ist, wobei die Speichereinrichtung (12) ausgebildet ist, Daten von dem externen Gerät (23) zu empfangen und die Daten zu speichern und/oder in der Speichereinrichtung (12) gespeicherte Daten an das externe Gerät (23) zu senden, wobei die Speichereinrichtung (12) derart ausgebildet ist, dass wenn die elektrische Energieversorgung der Speichereinrichtung (12) durch die Komponente erfolgt, Daten von der Kommunikationseinheit (17) an die Speichereinrichtung (26) übermittelbar sind und in der Speichereinrichtung (26) speicherbar sind und/oder in der Speichereinrichtung (26) gespeicherte Daten an die Kommunikationseinheit (17) übermittelbar sind.

2. Komponente nach Anspruch 1, **dadurch gekennzeichnet, dass** die Kommunikationseinheit (17) über einen Datenbus (16) zum Übermitteln von Daten mit der Speichereinrichtung (12) verbunden ist.

3. Komponente nach einem der vorhergehenden Ansprüche, **dadurch gekennzeichnet, dass** die Kommunikationseinheit (17) als Mikrocontroller ausgebildet ist.

4. Komponente nach einem der vorhergehenden Ansprüche,
**dadurch gekennzeichnet, dass** die Komponente (2) eine Schnittstelle (15) aufweist über die Daten von einer weiteren Komponente (1,3,4,5,27) der Maschine über die Kommunikationseinheit (17) an die Speichereinrichtung (12) übermittelbar sind und in der Speichereinrichtung (12) speicherbar sind und/oder über die in der Speichereinrichtung (12) gespeicherte Daten von der Speichereinrichtung (12) über die Kommunikationseinheit (17) an die weitere Komponente (1,3,4,5,27) der Maschine übermittelbar sind.

5. Komponente nach einem der vorhergehenden Ansprüche,
**dadurch gekennzeichnet, dass** die Komponente (2) einen Sensor (22a) aufweist und/oder ein Sensor (22b) an die Komponente angekoppelt ist, der eine physikalische Größe misst und als Daten in der Speichereinrichtung (2) abspeichert.

6. Komponente nach einem der vorhergehenden Ansprüche,
**dadurch gekennzeichnet, dass** die Komponente einen Zähler (30) aufweist, der die Betriebsdauer der Komponente ermittelt und als Daten in der Speichereinrichtung (12) abspeichert.

7. Komponente nach einem der vorhergehenden Ansprüche,
**dadurch gekennzeichnet, dass** die Daten in Form von einer Bestellnummer, Fertigungsnummer, Produktnummer, Zulassungsnummer, Hardwarestand, Softwarestand, Netzwerkadresse, physikalische Größe, Betriebsdauer und/oder als Beschreibungstext vorliegen.

8. Komponente nach einem der vorhergehenden Ansprüche,
**dadurch gekennzeichnet, dass** die Antenne (14a,14b) an das Gehäuse der Komponente angeordnet ist oder in das Material des Gehäuses der Komponente eingebettet ist.

9. Komponente nach einem der vorhergehenden Ansprüche,
**dadurch gekennzeichnet, dass** die Komponente als Bedieneinrichtung (2), Steuereinrichtung (1), Regeleinrichtung (3), Stromrichter (4), Motor (5), Geber (27) oder als Schaltschrank (28) ausgebildet ist.

10. Werkzeugmaschine, Produktionsmaschine und/oder Roboter mit einer Komponente nach einem der Ansprüche 1 bis 9.
